# EUROPÄISCHE PATENTANMELDUNG

(11) **EP 2 031 840 A1**
(43) Veröffentlichungstag der Anmeldung: **04.03.2009**
(21) Anmeldenummer: 08405105.1
(22) Anmeldetag: 11.04.2008
(51) Int. Cl.: H04M 1/23, H04M 1/02, G06F 3/023, G06F 3/02

(54) **Schnellwahl SMS-Mobiltelefon sowie Schnellwahl SMS-Schnurlos-telefon für ein sehr rationelles Wählen von gespeicherten Telefon-adressen sowie das schnelle Verfassen von Kurzmitteilungen SMS**

(30) Priorität: 27.08.2007 CH 13392007
(71) Anmelder: Lüber, Heinrich, 5400 Baden (CH)
(72) Erfinder: Lüber, Heinrich, 5400 Baden (CH)

(57) **Zusammenfassung**

Mit dem Schnellwahl SMS-Mobiltelefon Fig. 1 und dem Schnellwahl SMS-Schnurlostelefon Fig. 2, können Telefonverbindungen schnellstens auf einfachste Art und Weise erstellt sowie Kurzmitteilungen (SMS) empfangen, rationell verfasst und versandt werden.

Auf dem jeweiligen Oberteil des aufgeklappten Mobiltelefons sowie dem einteiligen Schnurlostelefon befinden sich die üblichen Zifferntasten (1), in zwei horizontalen Reihen angeordnet. Auf dem jeweiligen Unterteil ist das Alphabet auf 26 übersichtlichen Tasten (2) aufgedrückt. Durch Drücken des ersten Buchstabens des Vornamens und darauffolgend noch des Nachnamens sowie auch eines Einzelnamens, der anzurufenden Person, wird die gewünschte Verbindung: Name mit Telefonnummer im Display zur Kontrolle angezeigt.

Um Kurzmitteilungen (SMS), verfassen zu können, sind die dafür notwendigen Satzzeichen auf den Zifferntasten (1) aufgedrückt.

Die Bedienungsoberfläche sowie die Grössenverhältnisse sind bei beiden Telefonen, dem Mobiltelefon und dem Schnurlostelefon, identisch. Somit kann abrupt, ohne sich umstellen zu müssen, vom Mobiltelefon zum Schnurlostelefon und umgekehrt, gewechselt werden.

## Beschreibung

Die Erfindung betrifft ein mobiles Telefon sowie ein funktionell gleichartiges Schnurlostelefon welche ein schnelles Wählen von gespeicherten Telefonadressen sowie ein sehr rationelles Schreiben von Kurzmitteilungen (SMS) ermöglichen. Beide Telefone sind trotz den, bei konventionellen Mobil- und Schnurlostelefone, nicht üblichen 26 Alphabet-Einzeltasten sehr übersichtlich und dennoch, betreffend deren Abmessungen, kaum grösser als die üblichen "Handy's" und Schnurloselefone. Sie sind extrem einfach zu bedienen, weshalb Tastenfehldrücke praktisch ausgeschlossen werden können.

Mit den bisher bekannten meistens "Handy" genannten Geräte, kann man nebst telefonieren und Kurzmitteilungen versenden und empfangen, auch fotografieren, Musik hören, spielen, fernsehen und vieles mehr.

Es gibt eine angemessene Käuferschicht die an den technischen Raffinessen, die die heutigen "Handy's" wie oben aufgelistet und grossenteils bereits auch die Schnuriostelefone beinhalten, nicht zu sehr interessiert sind, aber dennoch ohne Ärger schnell und sicher telefonieren möchten. Man möchte auch gerne auf eine unkomplizierte Art und Weise schnellstens Kurzmitteilungen empfangen und versenden können.
Es sind nicht nur ältere Leute, die nicht zu sehr an technischen Raffinessen interessiert sind (Ausnahmen selbstverständlich ausgenommen), die ein leicht zu handhabendes mobiles Telefon sowie auch ein entsprechendes Schnurlostelefon wünschen. Nicht zu vergessen sind speziell Handwerker und Kleinunternehmer, die auf Baustellen, in Werkstätten, in Lagerbetrieben und in Büros schnellstens telefonieren wollen. Sie möchten auch auf eine möglichst simple Art und Weise Telefonadressen schnellstens programmieren
können. Sie haben in der Regel auch nicht die Zeit zur Verfügung, mit den herkömmlichen "Handy's" Kurzmitteilungen zu verfassen und zu versenden. Auch hat nicht jede weitsichtige oder schwachsehende Person die Brille allseits zur Hand um die winzigen Buchstaben, die jeweils seitlich der Nummemtasten angeschrieben sind, zu erkennen. Mit dem beschriebenen Mobiltelefon sowie auch mit dem Schnurlostelefon können, dank der gut lesbaren Alphabet-Einzeltasten (2) und übersichtlichen Satzzeichen-Tasten (3), Kurzmitteilungen (SMS) sehr schnell verfasst und versandt werden. Diese Gegebenheit bietet speziell Handwerker und Kleinunternehmer den Vorteil einer wesentlichen Zeitersparnis, betreffend Kommunikation mit Lieferanten und rationeller Warenbestellung.

Für schon etwas ältere Personen bedeutet die nun für sie wirklich mögliche, zusätzliche Art der Kommunikation mit deren Verwandten und Freunden einen bedeutenden Komfort. Auch für Schüler und Studenten, die, um Telefonkosten sparen zu können, leidenschaftlich gerne SMS's verfassen und versenden wollen, ist die neuartige Kurzmitteilung-Erstellung geradezu sensationell. Die benötigte Zeit um ein SMS zu verfassen und zu versenden wird mit dem beschriebenen Mobiltelefon sowie auch mit dem Schnurlostelefon garantiert bis zur Hälfte reduziert. Da das entsprechende Schnurlostelefon eine zum Mobiltelefon identische Bedienungsoberfläche aufweist, ist der Wechsel vom Mobiltelefon zum Schnurlostelefon und umgekehrt, abrupt, ohne Umgewöhnung möglich.

Die beiden Telefone sind ausgesprochen bedienerfreundlich:
- die mit gut lesbaren Buchstaben sowie auch mit Worten bezeichneten Tasten sind für jeweils eine einzige Funktion zuständig. Eine Ausnahme sind die Zifferntasten, die auch Satzzeichen enthalten
- die angeschriebenen Tasten sind selbsterklärend
- das Display hat eine vernünftige Grösse, das genügend grosse Zeichen darstellen kann, damit schwach Sehende sowie auch weitsichtige Personen schnellstens telefonieren können, ohne erst die Lesebrille aufsuchen zu müssen.

Bezeichnung der zwei Ausführungsvarianten:

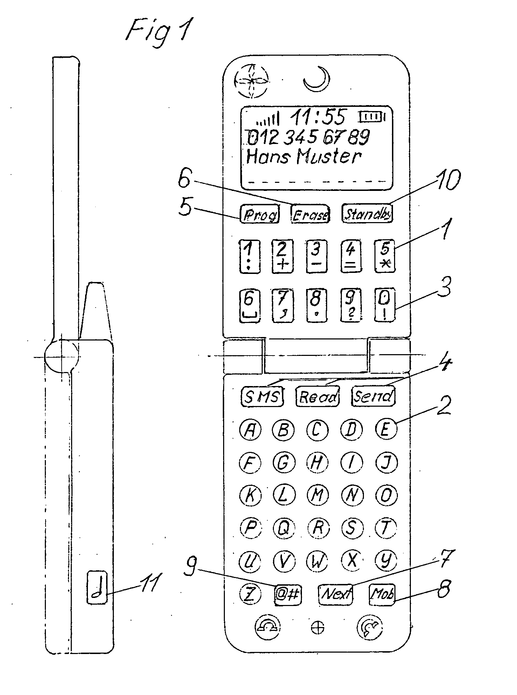

- **Fig. 1**: Schnellwahl SMS-Mobiltelefon in Englisch: QuickDial SMS-MobilePhone

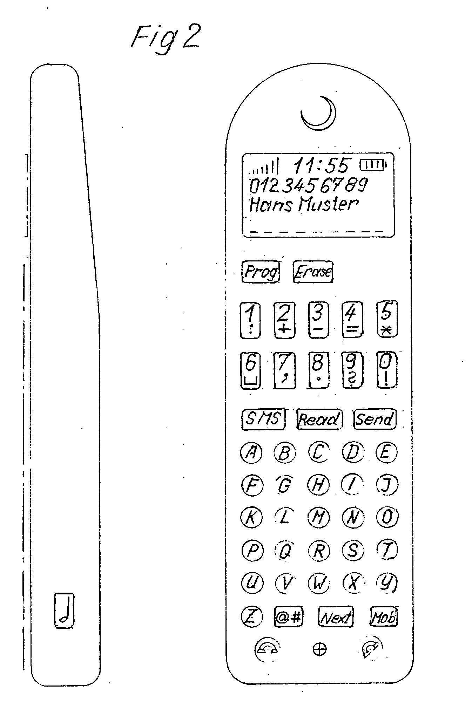

- **Fig. 2**: Schnellwahl SMS-Schnurlostelefon in Englisch: QuickDial SMS-CordlessPhone

Die Nummern- respektive Adressenwahl wird auf einfachste Art und Weise bewerkstelligt: Separate Alphabet-Tasten 2 erlauben eine sehr einfache direkte Wahl von Adressen mit deren Telefonnummem. Die Alphabet-Tasten sind sehr übersichtlich angeordnet, damit weitsichtige Anwender ohne Lesebrille sowie auch schwach Sehende schnellstens wählen können.
Nach Eingabe des jeweiligen Anfangsbuchstabens, vom Vornamen und vom Familiennamen, oder auch nur vom Vornamen je nach Programmierung, der angerufenen Person, werden diese mit zugehöriger Telefonnummer im Display angezeigt. Ist die Wahl korrekt, drückt man auf die grüne "Hörertaste", nimmt das Telefon zum Ohr und telefoniert. Der Vorteil der direkten Wahl mittels der Alphabet-Tasten ist offensichtlich, d.h. kein Suchen im Display nach klein geschriebenen Wörtern und Zahlen und auch kein Drücken von mit irgendwelchen Zeichen beschrifteten Tasten.

Die separaten Alphabet-Tasten erlauben ausserdem ein sehr einfaches und schnelles Programmieren von Adressen mit deren Telefonnummern. Das Verfassen von Kurznachrichten mit den Alphabettasten, zusammen mit den übersichtlichen Satzzeichen 3, von denen jeweils ein Zeichen mit einer Ziffemtaste kombiniert ist, kann in sehr kurzer Zeit durchgeführt werden.
Ist nicht auf SMS geschaltet kommt bei jedem Tastendruck die entsprechende Ziffer. Ist auf SMS geschaltet kommt beim ersten Tastendruck das entsprechende Satzzeichen. Wird im Text aber eine Ziffer benötigt, drückt man die Taste zweimal. Für weitere Satzzeichen ist eine zusätzliche Taste 9 neben der "Next-Taste" (7) vorhanden.

Anwendung der beschriebenen Telefone:
Bedienung mittels der Nummerntasten 1:
Sie sind platzsparend in 2 horizontalen Reihen angeordnet. Die Umstellung von der konventionellen zur neuen Anordnung ist schnellstens möglich.

- sobald ein Schnellwahl SMS-Mobiltelefon aufgeklappt wird, beginnt die Sendersuche. Dies falls nicht schon auf Empfang (Standby) 10 geschaltet war. Falls schon auf Empfang geschaltet war respektive ist, sind im Display die Empfangsstärke sowie der Ladezustand des Akkus angezeigt
- die digitale Zeitanzeige ist immer in Betrieb
- alle getippten Ziffern werden fortwährend im Display angezeigt falls falsch getippt "Lösch-Taste" (Erase) 6 drücken, löscht jeweils letzte Zahl! Rote "Hörertaste" drücken um ganze Telefonnummer zu löschen!
- neu wählen!
- sobald die korrekte Telefon-Nr. gewählt ist, kann die grüne "Hörertaste" gedrückt werden
- die Taste blinkt dann grün, dies bedeutet, dass die gewählte Telefonverbindung erstellt wird
- Telefon ans Ohr!, Warten!, Hören!, Reden!
- Gespräch beendigt?, rote "Hörertaste" drücken!, Erledigt

Schnellwahl gespeicherter Telefonadressen mit Hilfe der Alphabet-Tasten:
- im Alphabet-Tastenverzeichnis sind Namen zusammen mit zugehörigen Telefon-Nrn. gespeichert
- es sind Telefon-Nrn. von Fixnet-Telefonen als auch von mobilen Telefonen gespeichert
- wird die "Mob-Taste" 8 nicht gedrückt, erscheint nach der Adressenwahl die Fixnet-Telefon-Nr.
- meldet sich der/die Angerufene nicht, so kann durch nachträgliches Drücken der "Mob-Taste" direkt auf das mobile Telefon der angerufenen Person umgeschaltet werden
- will man aber zum vorhinein schon eine mobile Telefon-Nr. anrufen, so kann man schon vor der Adressenwahl die "Mob-Taste" drücken
- drückt man anfangs nicht schon die "Mob-Taste" obwohl nur eine mobile Telefon-Nr. abgespeichert ist, dann kommt direkt die mobile Telefon-Nr.

Telefon-Nrn. wählen wie folgt:
- Alphabet-Tasten drücken, z.B. "H" dann "M" für Hans Muster
- im Display sehen ob Wahl korrekt war!
- wenn ja, grüne "Hörertaste" drücken!, Telefon ans Ohr!, Warten!, Hören!, Reden!
- Gespräch beendigt?, rote "Hörertaste" drücken!, Erledigt
- falls Hans Muster noch mit einer zweiten Tel.-Nr. abgespeichert ist, "Next-Taste" 7 drücken!
- es folgt Hans Muster mit seiner zweiten Tel.-Nr.
- sollten unter HM noch weitere Adressen gespeichert sein, dann wie folgt vorgehen:
- "Next-Taste" drücken!
- es folgt nächste Adresse unter HM, z. B. Heinz Müller

Sind Adressen unter Einzelnamen wie z.B. Polizei abgespeichert,
- "P" drücken!
- im Display sehen, ob Wahl korrekt war!
- sollten unter P noch weitere Namen, wie zum Beispiel Peter, gespeichert sein, dann "Next-Taste" drücken und weiterfahren wie oben beschrieben, solange bis korrekter Name erscheint, in diesem Fall "Polizei"

- Sind Adressen unter Vornamen zusammen mit Nachnamen abgespeichert, von denen man nur noch den Vornmamen weiss, z. B. Barbara _
- "B" und dann "u-Taste" drücken!
- "Next-Taste" so oft drücken, bis soviele Vornamen, die unter "B" abgespeichert sind mit deren Nachnahmen, durchgeblättert sind, dass im Display schlussendlich Barbara zusammen mit einem Nachnamen erscheint, z.B. Barbara Unrichtig 041 xxx yy zz
- wiederum "Next-Taste" drücken, und dies solange, bis man den Nachnamen oder die Vorwahl-Nummer der gesuchten Barbara erkennt, z.B. Barbara Richtig 056 xxx yy zz

- Sind Adressen unter Vornamen zusammen mit Nachnamen abgespeichert, von denen man nur noch den Nachnamen kennt, z. B _ Cäsar
- " 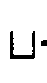 -Taste" und dann "C" drücken!
- "Next-Taste" so oft drücken, bis soviele Vornamen mit deren Nachnamen, die unter "C" abgespeichert sind, durchgeblättert sind, bis im Display Cäsar zusammen mit einem Vornamen erscheint, z.B. Hedy Cäsar
wiederum "Next-Taste" drücken, und dies solange, bis man den Vornamen oder eventuell auch die Vorwahl-Nummer der gesuchten Person erkennt, z. B. "Melanie" Cäsar

Progammieren: Namen mit Telefonnummern abspeichern, Löschen, Scrollen (blättern) Abrufbare Namen mit zugehörigen Telefon-Nrn. abspeichern:
- zum Beispiel Fixnet-Nr.: Hans Muster 0123456789
- "Prog-Taste" 5 drücken!
- "Hans" tippen, dann " 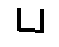 ", dann "Muster", dann " 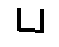 ", dann "0123456789", dann nochmals "Prog-Taste" drücken!
- erledigt.
- z. B. Mobile-Nr.: Hans Muster 0987654321
- "Prog-Taste" drücken!
- "Mob-Taste" drücken!
- "Hans" tippen, dann " 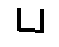 ", dann "Muster", dann " 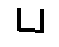 ", dann "0987654321", dann nochmals "Prog-Taste" drücken!
- erledigt.
- falls falsch getippt, "Lösch-Taste" (Erase) 6 drücken, löscht jeweils letztes Zeichen! Rote "Hörertaste" drücken, um ganze Telefonnummer zu löschen!
- neu tippen!

Einzelnamen wie z.B. Polizei abspeichern:
- zum Beispiel: Polizei 117
- "Prog-Taste" drücken!
- "POLIZEI" tippen, dann " 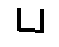 ", dann "117", dann nochmals "Prog-Taste" drücken!
- erledigt.
- falls falsch getippt, "Lösch-Taste" drücken, löscht jeweils letztes Zeichen! Rote "Hörertaste" drücken, um ganze Telefonnummer zu löschen!
- neu tippen!

Abrufbare Namen mit zugehörigen Telefon-Nrn. löschen:
- zum Beispiel: Hans Muster 0123456789
- "Lösch-Taste" (Erase) drücken!
- "HM" tippen!
- im Display sehen ob Wahl korrekt war!
- wenn nicht, "Next-Taste" sooft drücken bis korrekte Adresse erscheint!
- "Punkt-Taste" (3) drücken!
- "Lösch-Taste" (Erase) abermals drücken!
- diese Adresse mit Tel.-Nr. ist gelöscht

Scrollen um nicht mehr verwendete Adressen zu löschen:
- Taste "A" drücken!
- im Display erscheint der erste abgespeicherte Name, z. B. Andreas
- "Next-Taste" drücken!
- es erscheint der nächste abgespeicherte Name, z.B. Angela Müller
- wiederum "Next-Taste" drücken!
- es erscheint der nächste abgespeicherte Name, z. B. Barbara
- wiederum "Next-Taste" drücken!
- es erscheint z.B. Fredy Fernweh
- Fredy Fernweh ist nach Australien ausgewandert, und ich habe keinen Kontakt mehr mit ihm
- diese Adresse lösche ich
- in diesem Sinne weiterfahren bis wiederum eine Adresse erscheint, die ich löschen möchte
- diese Manipulationen beende ich durch Drücken der roten "Hörertaste"

Scrollen um halb vergessene Namen mit Telefonnummern aufzuspüren:
- vorgehen wie (Scrollen um nicht mehr verwendete Adressen zu löschen)
- das heisst, so oft die "Next-Taste" drücken bis gesuchter Name respektive Tel-Nr. aufgefunden ist
- nun aber im Gegensatz zu Adresse löschen, korrigiere oder berichtige ich diese Adresse
- diese Manipulationen beende ich durch Drücken der roten "Hörertaste"

Anordnung der zusätzlichen Zeichentasten um "SMS" schreiben und empfangen zu können:
Die ausser dem Alphabet benötigten zusätzlichen Satzzeichen-Tasten zum Schreiben von SMS sind mit den Zifferntasten kombiniert.
Ist nicht auf SMS-Schreiben geschaltet, kommt bei jedem Tastendruck die entsprechende Ziffer. Ist aber auf SMS geschaltet, kommt beim einmaligen Tastendruck das entsprechende Satzzeichen. Wird aber dennoch eine Ziffer benötigt, drückt man die Taste zweimal.

Kurznachricht (SMS) empfangen:
- Telefon ist oder wird auf Empfang 10 geschaltet, ein SMS wurde empfangen
- in zweit oberster Linie im Display steht SMS
- Lese-Taste" (Read) 4 drücken!
- es werden nach jedem Drücken jeweils die nächsten 3 Linien angezeigt
- durch Drücken der "SMS-Taste" 4 wird das gelesene SMS gespeichert
- falls aber die "Lösch-Taste" (Erase) 6 gedrückt wird, wird ganzes SMS gelöscht

Kurznachricht (SMS) senden:
- "SMS-Taste" 4 drücken!
- mit den Alphabet,- Satzzeichen- und Nummerntasten Text verfassen!
- zum Beispiel: Anna, komme heute abend um 19:30 bei dir vorbei! Okay?
- nur jeweils erster Buchstabe im Satz wird gross geschrieben
- Tippfehler?, "Lösch-Taste" (Erase) drücken! Es wird jeweils das letztgeschriebene Zeichen oder Wort gelöscht
- korrigieren!
- wenn Text vollständig, "Lese-Taste" (Read) drücken, um nochmals zu lesen was geschrieben ist
- "Sende-Taste" (Send) 4 drücken!
- im Display erscheint: Senden an:
- Telefon-Nr. oder Adresse, z. B. "AS" für Anna Schmid tippen!
- wenn Adresse resp. Tel.-Nr. korrekt, nochmals "Sende- Taste" drücken!
- SMS geht zum Empfänger und bleibt gespeichert
- erledigt.

Mittels der kleinen und der grossen "Musiknoten-Taste" 11, die beidseitig (auf der Schmalseite) am jeweiligen Telefon angebracht sind, kann man die Lautstärke während dem Telefonieren verändern.

## Patentansprüche

1. Zwei Telefone, das eine ist ein Mobiltelefon Fig. 1, das andere ist ein Schnurlostelefon Fig. 2, auf deren Oberteile im wesentlichen das Nummem-Tastenfeld (1) in zwei horizontalen Reihen angeordnet ist, auf denen auch die zum Kurzmitteilungen-Verfassen (SMS) notwendigen Satzzeichen (3) aufgedrückt sind sowie 3 Funktionstasten (5), (6) u. (10), und auf deren Unterteil ein Alphabet-Tastenfeld (2) mit 26 Alphabettasten und zusätzlichen 2 Steuertasten (7) u. (8) sowie 3 Sondertasten (4) für die Kurzmitteilungsfunktionen, angeordnet sind,
**dadurch gekennzeichnet, dass** ausser den Nummemtasten (1), die noch mit Satzzeichen (3) kombiniert sind und noch einer speziellen Satzzeichentaste (9), auf allen übrigen Tasten ein einziges Zeichen oder Wort aufgeschrieben ist, welches für jeweils nur eine Funktion benötigt wird.

2. Zwei Telefone gemäss Anspruch 1,
**dadurch gekennzeichnet, dass** man mittels der 26 Buchstaben des Alphabettastenfeldes (2) eine unbegrenzte Zahl (natürlich je nach Software-Kapazität) von Adressen mit deren Telefonnummern speichern und abrufen kann.

3. Zwei Telefone gemäss Anspruch 2,
**dadurch gekennzeichnet, dass** man eine Telefonadresse aufrufen (wählen) kann, indem man die Taste mit dem ersten Buchstaben des Vornamens und darauffolgend die Taste mit dem ersten Buchstaben des Nachnamens drückt.

4. Zwei Telefone gemäss Anspruch 2,
**dadurch gekennzeichnet, dass**, sollte man Einzelnamen wie Polizei, Sanität, Firmennamen oder einzelne Vornamen oder Nachnahmen, zusammen mit deren Telefonnummern gespeichert haben, man die jeweils entsprechende Telefonadresse wählen kann, indem man die Taste mit dem ersten Buchstaben des Einzelnamens drückt.

5. Zwei Telefone gemäss Anspruch 3 und 4,
**dadurch gekennzeichnet, dass**, sollten mehrere Namen oder Adressen mit gleichen Anfangsbuchstaben abgespeichert sein, man, nach Sicht auf die Anzeige im Display, mit der "Next-Taste" (7) solange blättert, bis die gesuchte Telefonadresse erscheint.

6. Zwei Telefone gemäss Anspruch 2 bis 5,
**dadurch gekennzeichnet, dass** man mittels Blättern (Scrollen) durch kontinuierliches Drücken der "Next-Taste" und beobachten der Anzeige im Display, halb vergessene Telefonadressen auffinden, sie korrigieren, oder falls nicht mehr gebraucht, löschen kann.

7. Zwei Telefone gemäss Anspruch 1,
**dadurch gekennzeichnet, dass** mittels der "Mob-Taste" (8) jeweils von der Fixnet Tel-Nr. zur Mobilnet Tel-Nr. und umgekehrt, umgeschaltet werden kann.

8. Zwei Telefone gemäss Anspruch 1,
**dadurch gekennzeichnet, dass** die zum Kurzmitteilungen verfassen notwendigen Satzzeichen (3) mit den Zifferntasten (1) kombiniert sind.

9. Zwei Telefone gemäss Anspruch 1,
**dadurch gekennzeichnet, dass** in den Displays in der ersten Linie die Sendestärke, die Uhrzeit und der Ladezustand des Akkus, in der zweiten Linie die Telefonnummer, in der dritten Linie Vorname und Nachnahme angezeigt werden, und die vierte Linie zusätzlich für Kurzmitteilungs-Texte zur Verfügung steht.
